# EUROPEAN PATENT APPLICATION

(11) **EP 4 109 659 A1**
(43) Date of publication of application: **28.12.2022**
(21) Application number: 21765131.4
(22) Date of filing: 04.03.2021
(51) Int. Cl.: H01M 50/417, H01M 50/403

(54) **BATTERY SEPARATOR AND PREPARATION METHOD THEREFOR, BATTERY, AND TERMINAL**

(30) Priority: 04.03.2020 CN 202010146312
(71) Applicant: Huawei Technologies Co., Ltd., Shenzhen, Guangdong 518129, (CN)
(72) Inventor: ZHANG, Xinzhi, Shenzhen, Guangdong 518129 (CN); DENG, Yaoming, Shenzhen, Guangdong 518129 (CN); GAO, Yunlei, Shenzhen, Guangdong 518129 (CN); YANG, Dongfang, Shenzhen, Guangdong 518129 (CN); XU, Fan, Shenzhen, Guangdong 518129 (CN); XIE, Fengchao, Shenzhen, Guangdong 518129 (CN); LI, Zhengjie, Shenzhen, Guangdong 518129 (CN)
(74) Representative: Gill Jennings & Every LLP
(86) International application number: PCT/CN2021/078988
(87) International publication number: WO 2021/175277

(57) **Abstract**

Embodiments of this application provide a battery separator, including a poly olefin-based porous separator, where the polyolefin-based porous separator includes polyethylene resin, an elongation rate of the polyolefin-based porous separator in an MD direction is greater than 120%, an elongation rate in a TD direction is greater than 120%, and for the polyolefin-based porous separator, crystallinity at a first-time temperature rise of polyethylene that is measured by using a differential scanning calorimeter is less than 65%, crystallinity at a second-time temperature rise is less than 55%, and a difference between the crystallinity at the first-time temperature rise and the crystallinity at the second-time temperature rise is less than 12%. The battery separator features a high elongation rate and a low temperature of closing a pore. When a battery cell is mechanically abused, a risk of separator breakage can be reduced by implementing embodiments of this application. In addition, a separator pore can be closed in advance when the battery cell is in thermal abuse, to improve safety of the battery cell. Embodiments of this application further provide a preparation method for a battery separator, and a battery and a terminal that use the battery separator.

## Description

This application claims priority to Chinese Patent Application No. 2020101463129, filed with the China National Intellectual Property Administration on March 4, 2020 and entitled "BATTERY SEPARATOR, PREPARATION METHOD FOR BATTERY SEPARATOR, BATTERY, AND TERMINAL", which is incorporated herein by reference in its entirety.

### TECHNICAL FIELD

This application relates to the field of lithium-ion battery technologies, and in particular, to a battery separator, a preparation method for a battery separator, a battery, and a terminal.

### BACKGROUND

Currently, a lithium-ion battery is a commercially available and widely used secondary power supply. In the lithium-ion battery, a separator is a porous, electrochemically inert medium between a positive electrode and a negative electrode, and the separator is not involved in an electrochemical reaction, but is crucial to safety of a battery cell. Currently, a commonly used polyolefin separator has poor ductility, and consequently when the battery cell is mechanically abused, the separator is easily punctured, and a short-circuit point is formed between the positive electrode and the negative electrode at a position at which the separator is broken. Consequently, the battery cell fails because of thermal runaway, resulting in a potential safety hazard.

### SUMMARY

Embodiments of this application disclose a battery separator. The battery separator features a high elongation rate, so that a risk of separator breakage can be reduced when a battery cell is mechanically abused. In addition, the separator has a low temperature of closing a pore, so that a separator pore can be closed in advance when the battery cell is in thermal abuse, to improve safety of the battery cell.

A first aspect of embodiments of this application discloses a battery separator, including a polyolefin-based porous separator. The polyolefin-based porous separator includes polyethylene resin. An elongation rate of the polyolefin-based porous separator in an MD direction (Machine Direction, machine direction, namely, a longitudinal or length direction) is greater than 120%, and an elongation rate in a TD direction (Transverse Direction, perpendicular to the machine direction, namely, a transverse or width direction) is greater than 120%. For the polyolefin-based porous separator, crystallinity at a first-time temperature rise of polyethylene that is measured by using a differential scanning calorimeter is less than 65%, and crystallinity at a second-time temperature rise is less than 55%.

In this implementation of this application, a difference between the crystallinity at the first-time temperature rise and the crystallinity at the second-time temperature rise is less than 18%.

In this implementation of this application, a temperature of closing a pore of the polyolefin-based porous separator is less than or equal to 140°C.

In this implementation of this application, a temperature of breaking a separator of the polyolefin-based porous separator is greater than or equal to 150^{∗}:3.

In this implementation of this application, a polyethylene resin raw material for preparing the polyolefin-based porous separator includes polyethylene resin with crystallinity that is less than 50%. Selection of the polyethylene raw material with low crystallinity may further improve an elongation rate and decrease the temperature of closing a pore. In this implementation, the temperature of closing a pore of the polyolefin-based porous separator may be less than or equal to 138°C.

In this implementation of this application, the polyolefin-based porous separator further includes heat-resistant resin, and a melting point of the heat-resistant resin is higher than a melting point of the polyethylene resin. Introduction of the heat-resistant resin may effectively raise the temperature of breaking the separator. In this implementation, the temperature of breaking the separator of the polyolefin-based porous separator may be greater than or equal to 160°C.

In this implementation of this application, the heat-resistant resin includes one or more of polypropylene, poly 1-butene, poly 1-pentene, poly 1-hexene, poly 4-methyl-1-pentene, poly 1-octene, polyvinyl acetate, polymethyl methacrylate, polystyrene, poly vinylidene fluoride, and polytetrafluoroethylene.

In this implementation of this application, a test method for measuring the crystallinity at the first-time temperature rise and the crystallinity at the second-time temperature rise by using the differential scanning calorimeter is that the polyolefin-based porous separator is heated above a melting point of the polyethylene at a speed of 10°C per minute for the first time, and heat preservation is performed for three minutes, to obtain the crystallinity at the first-time temperature rise of the polyethylene. Then the polyolefin-based porous separator is cooled to a temperature that is less than or equal to 40°C at the speed of 10°C per minute, and heat preservation is performed for three minutes. The polyolefin-based porous separator is again heated above the melting point of the polyethylene at the speed of 10°C per minute for the second time, to obtain the crystallinity at the second-time temperature rise of the polyethylene. The crystallinity at the first-time temperature rise of the polyethylene is obtained by dividing polyethylene melting enthalpy that is measured in a process of the first-time temperature rise by standard polyethylene melting enthalpy. The crystallinity at the second-time temperature rise of the polyethylene is obtained by dividing the polyethylene melting enthalpy that is measured in a process of the second-time temperature rise by the standard polyethylene melting enthalpy.

In this implementation of this application, in the polyolefin-based porous separator, a mass proportion of the polyethylene resin is greater than or equal to 70%.

In this implementation of this application, the polyolefin-based porous separator is a single-layer structure or a multi-layer structure.

In this implementation of this application, a thickness of the polyolefin-based porous separator is 1 µm to 14 µm.

In this implementation of this application, porosity of the polyolefin-based porous separator is 20% to 60%.

In this implementation of this application, an air permeability value of the polyolefin-based porous separator is greater than or equal to 50 sec/100 cc.

In this implementation of this application, the battery separator further includes a separator coating layer that is disposed on a surface on one side or two sides of the polyolefin-based porous separator.

In this implementation of this application, the separator coating layer includes an organic coating layer, an inorganic coating layer, and/or an organic-inorganic composite coating layer.

In this implementation of this application, the inorganic coating layer includes a ceramic coating layer, and a material of the ceramic coating layer is selected from one or more of aluminum oxide, silicon oxide, titanium oxide, zirconium oxide, zinc oxide, barium oxide, magnesium oxide, beryllium oxide, calcium oxide, thorium oxide, aluminum nitride, titanium nitride, boehmite, apatite, aluminum hydroxide, magnesium hydroxide, barium sulfate, boron nitride, silicon carbide, silicon nitride, cubic boron nitride, hexagonal boron nitride, graphite, graphene, and mesoporous molecular sieves (for example, MCM-41 and SBA-15).

In this implementation of this application, the organic coating layer is selected from one or more of an oily polyvinylidene fluoride coating layer, a vinylidene fluoride-hexafluoropropylene copolymer coating layer, a polystyrene coating layer, an aramid coating layer, a poly acrylate coating layer or a poly acrylate-modification coating layer, a polyester coating layer, a polyarylester coating layer, a polyacrylonitrile coating layer, an aromatic polyamide coating layer, a polyimide coating layer, a polyethersulfone coating layer, a polysulfone coating layer, a polyether ether ketone coating layer, a polyetherimide coating layer, and a polybenzimidazole coating layer.

In this implementation of this application, the thickness of the separator coating layer is 0.5 µm to 10 µm.

In this implementation of this application, the polyolefin-based porous separator is made by using a wet process.

A second aspect of embodiments of this application provides a preparation method for a battery separator, including:
mixing a polyolefin resin raw material and solvent to obtain a mixed liquid, where the polyolefin resin raw material includes a polyethylene resin raw material, and crystallinity measured after the polyethylene resin raw material is mixed together is less than 55%;
extruding the mixed liquid, and cooling and casting the mixed liquid into a sheet;
forming a porous membrane after first-time stretching, extraction, and drying of the sheet; and
obtaining the polyolefin-based porous separator after second-time stretching and heat setting of the porous membrane, and controlling, in a processing procedure in which the polyolefin-based porous separator is prepared by using the polyolefin resin raw material, an increase in crystallinity from the polyolefin resin raw material to a finished base separator to be less than 12%, crystallinity at a first-time temperature rise of polyethylene measured by using a differential scanning calorimeter for the obtained polyolefin-based porous separator to be less than 65%, and crystallinity at a second-time temperature rise of the polyethylene measured by using the differential scanning calorimeter for the obtained polyolefin-based porous separator to be less than 55%.

In this implementation of this application, a difference between the crystallinity at the first-time temperature rise and the crystallinity at the second-time temperature rise is less than 18%.

In this implementation of this application, in the polyethylene resin raw material, the polyethylene resin raw material includes polyethylene resin with crystallinity that is less than 50%.

In this implementation of this application, the polyolefin resin raw material further includes heat-resistant resin, and a melting point of the heat-resistant resin is higher than a melting point of the polyethylene resin.

In this implementation of this application, the first-time stretching includes stretching in two directions: an MD and a TD, and a total stretching multiple of MD × TD is less than or equal to 36.

In this implementation of this application, a unidirectional stretching multiple in the MD is less than or equal to 6, and a unidirectional stretching multiple in the TD is less than or equal to 6.

In this implementation of this application, a stretching temperature of the first-time stretching is 105°C to 135°C, and a unidirectional stretching speed in the MD or the TD is 2% to 70% per second.

In this implementation of this application, the second-time stretching includes two stretching directions: an MD and a TD, a unidirectional stretching multiple in the MD is 1 to 2, and a unidirectional stretching multiple in the TD is 1 to 2.

In this implementation of this application, in the operation of extruding the mixed liquid, and cooling and casting the mixed liquid into a sheet, a cooling speed is greater than 60°C per minute.

A third aspect of embodiments of this application provides a battery, including a positive electrode, a negative electrode, and a separator and an electrolyte that are located between the positive electrode and the negative electrode. The separator includes a battery separator described in the first aspect of embodiments of this application.

In this implementation of this application, the battery includes a lithium-ion battery.

An embodiment of this application further provides a terminal, including a housing, and a display module, an electronic component module, and a battery that are accommodated in the housing. The battery supplies power to the display module and the electronic component module, and the battery includes a battery described in the third aspect of embodiments of this application.

The battery separator provided in embodiments of this application has a high elongation rate, so that when a battery cell is mechanically abused, a risk that a separator is punctured can be reduced, a probability that the positive electrode and the negative electrode are short-circuited can be reduced, and safety of the battery cell can be improved. In addition, crystallinity of the separator is controlled to be relatively low, so that the separator also has a relatively low temperature of closing a pore, and when the battery cell is in thermal abuse, an ion channel can be cut off in a timely manner, thereby further improving the safety of the battery cell. In addition, the heat-resistant resin is further added, so that heat resistance of the separator can be improved, the temperature of breaking the separator can be increased, and the risk of separator breaking in the thermal abuse can be reduced. In addition, the polyethylene resin or polyethylene resin that is doped with another heat-resistant resin is used for the separator. The property of the high elongation rate can be achieved by using a conventional wet process of separator manufacturing. No second-time treatment needs to be performed for the base separator, to improve the elongation rate, and no tedious process is introduced. Therefore, cost control is facilitated.

### BRIEF DESCRIPTION OF DRAWINGS

FIG. 1 is a schematic diagram of a structure of a lithium-ion secondary battery according to an embodiment of this application;
FIG. 2A is a schematic diagram of a nail penetration experiment for an existing base separator with a common elongation rate;
FIG. 2B is a schematic diagram of a nail penetration experiment for a polyolefin-based porous separator according to an embodiment of this application;
FIG. 3 is a schematic diagram of a technological process for preparing a battery separator according to an embodiment of this application; and
FIG. 4 is a schematic diagram of a structure of a terminal according to an embodiment of this application.

### DESCRIPTION OF EMBODIMENTS

The following describes embodiments of this application with reference to the accompanying drawings in embodiments of this application.

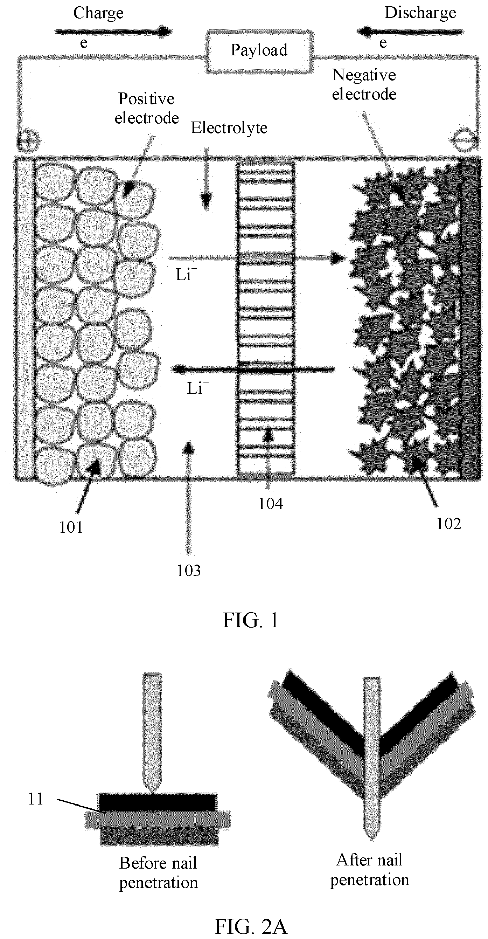

As shown in FIG. 1, core components of a lithium-ion secondary battery include a positive electrode material 101, a negative electrode material 102, an electrolyte 103, a separator 104, and a corresponding connection accessory and circuit. The positive electrode material 101 and the negative electrode material 102 may be disembedded from a lithium ion, to store and release energy. The electrolyte 103 is a carrier for transmitting the lithium ion between a positive electrode and a negative electrode. The separator 104 is permeable to the lithium iron, but does not conduct electricity, thereby separating the positive electrode from the negative electrode to prevent a short circuit. Basic properties of a separator are porosity (which may provide a channel for transmitting an ion) and electrical insulation (which prevents electric leakage). Multi-functionalization of the separator divides the separator into two parts: a base separator and a separator coating layer. The base separator is the most basic part of the separator, may be used alone in a battery cell, and mainly provides the porosity and the electrical insulation. The separator coating layer is a part that is attached to the base separator and that is additionally added, and mainly provides new functions such as heat resistance and high adhesion.

A battery separator provided in an embodiment of this application may be applied to a lithium-ion secondary battery, and includes a polyolefin-based porous separator. The polyolefin-based porous separator includes polyolefin resin, and the polyolefin resin includes polyethylene resin. An elongation rate of the polyolefin-based porous separator in an MD direction is greater than 120%, and an elongation rate of the polyolefin-based porous separator in a TD direction is greater than 120%. For the polyolefin-based porous separator, crystallinity at a first-time temperature rise of polyethylene measured by using a differential scanning calorimeter is less than 65%, and crystallinity at a second-time temperature rise of the polyethylene measured by using the differential scanning calorimeter is less than 55%.

In this implementation of this application, a test method for measuring the crystallinity at the first-time temperature rise and the crystallinity at the second-time temperature rise by using the differential scanning calorimeter is that the polyolefin-based porous separator is heated above a melting point of the polyethylene at a speed of 10°C per minute for the first time, and heat preservation is performed for three minutes, to obtain the crystallinity at the first-time temperature rise of the polyethylene. Then the polyolefin-based porous separator is cooled to a temperature that is less than or equal to 40°C at the speed of 10°C per minute, and heat preservation is performed for three minutes. The polyolefin-based porous separator is again heated above the melting point of the polyethylene at the speed of 10°C per minute for the second time, to obtain the crystallinity at the second-time temperature rise of the polyethylene. A temperature above the melting point of the polyethylene may be 200°C. Specifically, the crystallinity at the first-time temperature rise of the polyethylene is obtained by dividing polyethylene melting enthalpy that is measured in a process of the first-time temperature rise by standard polyethylene melting enthalpy. The crystallinity at the second-time temperature rise of the polyethylene is obtained by dividing the polyethylene melting enthalpy that is measured in a process of the second-time temperature rise by the standard polyethylene melting enthalpy. The standard polyethylene melting enthalpy is calculated at 293 J per gram. It should be noted that if the polyolefin resin further includes another resin with a higher melting point than a melting point of the polyethylene, only crystallinity of the polyethylene is calculated when crystallinity is calculated.

In this implementation of this application, the crystallinity at the first-time temperature rise of the polyethylene is crystallinity that is measured by performing a first-time temperature rise and melting on the polyolefin-based porous separator, and represents crystallinity of the base separator. The crystallinity at the second-time temperature rise of the polyethylene is crystallinity that is measured through a second-time temperature rise and melting after cooling, and represents crystallinity of the polyethylene resin in a separator raw material. If the base separator is made of a plurality of polyethylene resin raw materials, the crystallinity at the second-time temperature rise is a test value for the plurality of polyethylene resin raw materials that are mixed. A difference between the crystallinity at the first-time temperature rise and the crystallinity at the second-time temperature rise is an increase in crystallinity from the polyethylene resin raw material to a finished polyolefin-based porous separator. An inventor of this application finds through an experiment that the increase in crystallinity from the polyethylene resin raw material to the finished base separator is controlled to be less than 18%, that is, the difference between the crystallinity at the first-time temperature rise and the crystallinity at the second-time temperature rise is controlled to be less than 18%, so that an elongation rate of the separator may be significantly improved. A lower increase in crystallinity indicates a more obvious effect in improving the elongation rate. In some implementations of this application, the increase in crystallinity is controlled to be less than or equal to 17%, that is, the difference between the crystallinity at the first-time temperature rise and the crystallinity at the second-time temperature rise is controlled to be less than or equal to 17%. In some other implementations, the increase in crystallinity may be alternatively controlled to be less than or equal to 16%, or the increase in crystallinity may be alternatively controlled to be less than or equal to 15%. In some implementations of this application, the increase in crystallinity is controlled to be less than or equal to 11%, that is, the difference between the crystallinity at the first-time temperature rise and the crystallinity at the second-time temperature rise is controlled to be less than or equal to 11%. In some other implementations of this application, the difference between the crystallinity at the first-time temperature rise and the crystallinity at the second-time temperature rise is less than or equal to 10%. Specifically, for example, the difference between the crystallinity at the first-time temperature rise and the crystallinity at the second-time temperature rise is controlled to be 17%, 16%, 15%, 14%, 13% 12%, 11%, 10%, 9%, 8%, 7%, 6%, 5%, 4%, 3%, 2%, or 1%.

In this implementation of this application, for the polyolefin-based porous separator, the crystallinity at the first-time temperature rise of the polyethylene measured by using the differential scanning calorimeter may be less than 60%, and the crystallinity at the second-time temperature rise of the polyethylene measured by using the differential scanning calorimeter is less than 50%. Specifically, in some implementations, for the polyolefin-based porous separator, the crystallinity at the first-time temperature rise of the polyethylene measured by using the differential scanning calorimeter may be 20% to 60%, and the crystallinity at the second-time temperature rise of the polyethylene measured by using the differential scanning calorimeter is 10% to 50%. Lower crystallinity helps obtain a higher elongation rate and a lower temperature of closing a pore.

In the battery separator in this embodiment of this application, the crystallinity is controlled to be at a relatively low level, and it is ensured that the difference between the crystallinity at the first-time temperature rise of the separator and the crystallinity at the second-time temperature rise of the separator is less than 18%, that is, there is a small increment in crystallinity of the finished separator relative to the polyethylene resin raw material. The crystallinity represents a proportion of a crystallization region in a polymer. Low crystallinity indicates that the base separator has high amorphous regions. These amorphous regions have better ductility under an action of an external stress, that is, have a higher elongation rate in a property of the base separator. The property of the high elongation rate of the separator can reduce a risk of separator breaking when a battery cell is mechanically abused, and improve safety of the battery cell. In addition, the crystallinity of the polyethylene resin raw material is relatively low, and therefore the base separator can obtain a relatively low temperature of closing a pore, so that a separator pore can be closed in advance when the battery cell is in thermal abuse, to improve the safety of the battery cell.

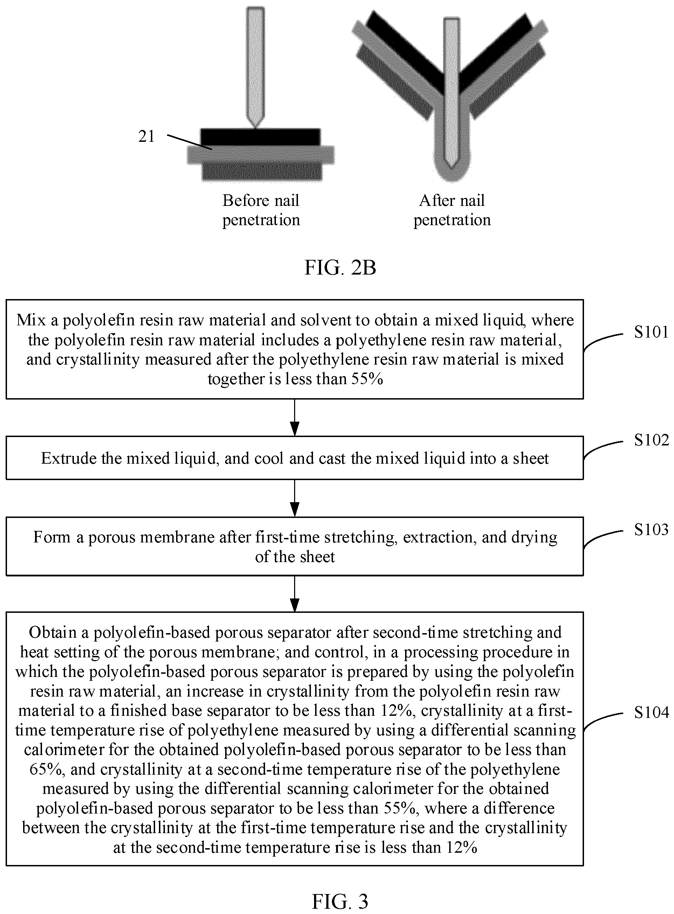

Specifically, the high elongation rate of the separator may improve a pass rate of the battery cell in mechanical abuse tests such as nail penetration and impact. For example, when the nail penetration test is performed, as shown in FIG. 2A, for a base separator 11 with a common elongation rate, the base separator 11 has poor ductility, and consequently a nail penetrates the separator quite easily, and a short-circuit point is formed between a positive electrode and a negative electrode at a position at which the separator is broken. Consequently, the battery cell fails because of thermal runaway. As shown in FIG. 2B, for a base separator 21 with a high elongation rate in this embodiment of this application, the base separator 21 has good ductility, the separator may wrap the nail to some extent when the nail penetration test is performed, to reduce a probability and degree of the separator breaking, prevent a short-circuit between the positive electrode and the negative electrode, and pass the nail penetration test.

In this implementation of this application, the elongation rate is also referred to as an elongation rate at break, which means that an increased length when a tensile test is performed on a separator with a specific size under a specific condition and the separator is just pulled to break is divided by an initial length of the separator. To be specific, the elongation rate is a percentage of an increment in the length when the separator is pulled to break relative to the initial length. A higher elongation rate indicates that it is more difficult to pull the separator to break, and indicates better ductility. In some implementations of this application, the elongation rate of the polyolefin-based porous separator in the MD direction is greater than or equal to 150%, and the elongation rate of the polyolefin-based porous separator in the TD direction may be greater than or equal to 150%. In some specific implementations of this application, the elongation rate of the polyolefin-based porous separator in the MD direction may be 160% to 300%, and the elongation rate of the polyolefin-based porous separator in the TD direction may be 160% to 300%.

In this implementation of this application, a temperature of closing a pore of the polyolefin-based porous separator is less than or equal to 140°C. In some implementations of this application, a temperature of closing a pore of the polyolefin-based porous separator is less than or equal to 138°C.

In this implementation of this application, a temperature of breaking a separator of the polyolefin-based porous separator is greater than or equal to 150°C. In some implementations of this application, the temperature of breaking the separator of the polyolefin-based porous separator may be greater than or equal to 160°C.

In this implementation of this application, a polyethylene resin raw material with relatively low crystallinity is selected, so that the elongation rate of the base separator may be further improved, and the temperature of closing a pore of the separator may be reduced. In this implementation of this application, a polyethylene resin raw material for preparing the polyolefin-based porous separator includes polyethylene resin with crystallinity that is less than 50%. In a specific implementation of this application, mass content of the polyethylene with the crystallinity that is less than 50% may be greater than 5%.

In this implementation of this application, in the polyolefin-based porous separator, a mass proportion of the polyethylene is greater than or equal to 70%. Relatively high polyethylene content makes the polyethylene a main material of the separator, so that the polyethylene can be better used to achieve properties of the high elongation and a low temperature of closing a pore, and improve machinability. In some specific implementations of this application, in the polyolefin-based porous separator, the mass proportion of the polyethylene may be 70%, 80%, 85%, 90%, 95%, or the like.

In an implementation of this application, the polyolefin-based porous separator includes only the polyethylene, that is, the polyolefin-based porous separator is formed by the polyethylene resin. A type of the polyethylene resin is not limited, and the polyethylene resin may be at least one or more of ultra-high molecular weight polyethylene, high density polyethylene, low density polyethylene, and linear low density polyethylene. Molecular weight of the polyethylene resin is not particularly limited. In some implementations of this application, the molecular weight of the polyethylene resin may be 50 thousand to 5 million. In some other implementations of this application, the molecular weight of the polyethylene resin may be 100 thousand to 2 million. In this implementation, the polyolefin-based porous separator may be a single-layer structure or a multi-layer structure, and the multi-layer structure may be specifically two layers, three layers, or the like. When the polyolefin-based porous separator is the multi-layer structure, resin composition of different layers may be the same or different.

In another implementation of this application, the polyolefin-based porous separator further includes heat-resistant resin, that is, the polyolefin-based porous separator is formed jointly by the polyethylene resin and the heat-resistant resin. A melting point of the heat-resistant resin is higher than a melting point of the polyethylene, involvement of the heat-resistant resin may improve heat resistance of the separator and increase the temperature of breaking the separator. In this implementation of this application, the heat-resistant resin may be one or more of polypropylene, poly 1-butene, poly 1-pentene, poly 1-hexene, poly 4-methyl-1-pentene, poly 1-octene, polyvinyl acetate, polymethyl methacrylate, polystyrene, poly vinylidene fluoride, and polytetrafluoroethylene. In this implementation, the polyolefin-based porous separator may be a single-layer structure or a multi-layer structure, and the multi-layer structure may be specifically two layers, three layers, or the like. When the polyolefin-based porous separator is the single-layer structure, the single-layer structure is formed jointly by the polyethylene resin and the foregoing one or more types of heat-resistant resin. The polyethylene resin and the heat-resistant resin are uniformly distributed in the polyolefin-based porous separator. When the polyolefin-based porous separator is the multi-layer structure, resin composition of different layers may be the same or different. Resin composition of each membrane layer may be adjusted based on an actual product requirement. The heat-resistant resin and the polyethylene resin may exist at a same layer or different layers. In other words, the heat-resistant resin may be blended with the polyethylene resin to form a single membrane layer, or the heat-resistant resin may form a single membrane layer alone, and then is laminated with a membrane layer of the polyethylene resin.

In this implementation of this application, a thickness of the polyolefin-based porous separator is 1 µm to 14 µm. In some implementations of this application, the thickness of the polyolefin-based porous separator may be 1 µm to 10 µm. In some other implementations of this application, the thickness of the polyolefin-based porous separator may be 9 µm, 8 µm, 7 µm, 6 µm, 5 µm, 4 µm, 3 µm, 2 µm, or 1 µm. Specifically, the thickness of the polyolefin-based porous separator may be set based on an actual requirement.

In this implementation of this application, porosity of the polyolefin-based porous separator is 20% to 60%. Suitable porosity may provide an effective channel for ion transmission.

In this implementation of this application, an air permeability value of the polyolefin-based porous separator is greater than or equal to 50 sec/100 cc.

In this implementation of this application, a size of porous pores of the polyolefin-based porous separator may be less than 200 nm.

In this implementation of this application, to enable the battery separator to have a better functional property, the battery separator may further include a separator coating layer that is disposed on a surface on one side or two sides of the polyolefin-based porous separator. The separator coating layer may include an organic coating layer, an inorganic coating layer, and/or an organic-inorganic composite coating layer. The inorganic coating layer may include a ceramic coating layer, and a material of the ceramic coating layer may be selected from one or more of aluminum oxide, silicon oxide, titanium oxide, zirconium oxide, zinc oxide, barium oxide, magnesium oxide, beryllium oxide, calcium oxide, thorium oxide, aluminum nitride, titanium nitride, boehmite, apatite, aluminum hydroxide, magnesium hydroxide, barium sulfate, boron nitride, silicon carbide, silicon nitride, cubic boron nitride, hexagonal boron nitride, graphite, graphene, and mesoporous molecular sieves (MCM-41 and SBA-15). The organic coating layer may be one or more of an oily polyvinylidene fluoride coating layer, a vinylidene fluoride-hexafluoropropylene copolymer coating layer, a polystyrene coating layer, an aramid coating layer, a polyacrylate coating layer or a polyacrylate-modification coating layer, a polyester coating layer, a polyarylester coating layer, a polyacrylonitrile coating layer, an aromatic polyamide coating layer, a polyimide coating layer, a polyethersulfone coating layer, a polysulfone coating layer, a polyether ether ketone coating layer, a polyetherimide coating layer, and a polybenzimidazole coating layer. The organic-inorganic composite coating layer is prepared by mixing the inorganic coating layer material and the organic coating layer material. Selection of a specific coating layer may be set based on an actual requirement. In a specific implementation of this application, the separator coating layer includes the ceramic coating layer and the oily polyvinylidene fluoride (PVDF) coating layer that is disposed on the separator coating layer. A ceramic is of high temperature resistance and may improve heat resistance of the separator. The polyvinylidene fluoride has specific adhesive performance, and therefore may improve an adhesive force between the separator and the positive and negative electrode films, improve hardness of the battery cell, and further improve the pass rate of the battery cell in the nail penetration test. Certainly, in some other implementations of this application, the oily polyvinylidene fluoride coating layer may be alternatively directly applied to a surface of the base separator. In this implementation of this application, the thickness of the separator coating layer may be 0.5 µm to 10 µm.

This embodiment of this application is implemented, so that when the battery cell is mechanically abused, the risk in which the separator is punctured can be reduced, a probability that the positive electrode and the negative electrode are short-circuited can be reduced, and safety of the battery cell can be improved. In addition, crystallinity of the separator is controlled to be relatively low, so that the separator also has a relatively low temperature of closing a pore, and when the battery cell is in thermal abuse, an ion channel can be cut off in a timely manner, thereby further improving the safety of the battery cell. The heat-resistant resin is added, so that the heat resistance of the separator can be improved, the temperature of breaking the separator can be increased, and the risk of separator breaking in the thermal abuse can be reduced. In addition, the polyethylene resin or polyethylene resin that is doped with another heat-resistant resin is used for the separator. The property of the high elongation rate can be achieved by using a conventional wet process of separator manufacturing. No second-time treatment needs to be performed for the base separator, to improve the elongation rate, and no tedious process is introduced. Therefore, cost control is facilitated.

In this application, the thermal abuse refers to an abuse test of the battery cell in respect of heat (or a high temperature), for example, a heating test (in which the battery cell is baked at a high temperature that is greater than or equal to 130°C). The mechanical abuse refers to an abuse test of the battery cell in respect of an external mechanical stress, for example, the nail penetration test and the impact test.

As shown in FIG. 3, an embodiment of this application further provides a preparation method for the foregoing battery separator, including the following steps:

S101. Mix a polyolefin resin raw material and solvent to obtain a mixed liquid, where the polyolefin resin raw material includes a polyethylene resin raw material, and crystallinity measured after the polyethylene resin raw material is mixed together is less than 55%.

S102. Extrude the mixed liquid, and cool and cast the mixed liquid into a sheet.

S103. Form a porous membrane after first-time stretching, extraction, and drying of the sheet.

S104. Obtain the polyolefin-based porous separator after second-time stretching and heat setting of the porous membrane; and control, in a processing procedure in which the polyolefin-based porous separator is prepared by using the polyolefin resin raw material, an increase in crystallinity from the polyolefin resin raw material to a finished base separator to be less than 12%, crystallinity at a first-time temperature rise of polyethylene measured by using a differential scanning calorimeter for the obtained polyolefin-based porous separator to be less than 65%, and crystallinity at a second-time temperature rise of the polyethylene measured by using the differential scanning calorimeter for the obtained polyolefin-based porous separator to be less than 55%.

In this implementation of this application, in the processing procedure in which the base separator is prepared by using the polyolefin resin raw material, crystallinity of the polyolefin varies. An increase in crystallinity of a raw material in a processing procedure is controlled, so that final crystallinity of a finished separator may be controlled to be at a relatively low level. Specifically, the increase in crystallinity from the polyethylene resin raw material to the finished base separator is controlled to be less than 18%, that is, a difference between the crystallinity at the first-time temperature rise and the crystallinity at the second-time temperature rise is controlled to be less than 18%, so that an elongation rate of the separator may be significantly improved. A lower increase in crystallinity indicates a more obvious effect in improving the elongation rate. In some implementations of this application, the increase in crystallinity is controlled to be less than or equal to 11%. In some other implementations of this application, the increase in crystallinity is controlled to be less than or equal to 10%. Specifically, for example, the increase in crystallinity is controlled to be 17%, 16%, 15%, 14%, 13%, 12%, 11%, 10%, 9%, 8%, 7%, 6%, 5%, 4%, 3%, 2%, or 1%.

In the preparation method in this application, the foregoing conventional wet process is used to manufacture the polyolefin-based separator. Crystallinity of a separator raw material is controlled through selection, the crystallinity of the finished base separator is controlled through processing, and the increase in crystallinity from the separator raw material of the polyethylene resin to the finished base separator is controlled to be less than 18%, and therefore a base separator with a high elongation rate and a low temperature of closing a pore is obtained. A property of the high elongation rate enables the base separator to have good ductility when a battery cell is mechanically abused, and has an effect of suppressing a short circuit of the battery cell, thereby improving safety of the battery cell. A property of the low temperature of closing a pore enables an ion channel to be cut off in a timely manner when the battery cell is in thermal abuse, thereby improving safety of the battery cell.

In this implementation of this application, in step S101, if the polyethylene resin raw material is optimized, for example, a polyethylene resin raw material with relatively low crystallinity is used, the elongation rate of the base separator may be further improved and the temperature of closing a pore of the separator may be reduced. In this implementation of this application, the polyethylene resin raw material contains polyethylene resin with crystallinity that is less than 50%. Specifically, the polyethylene resin raw material may include one or more polyethylene resins. When a plurality of polyethylene resins are included, one or more polyethylene resins with the crystallinity that is less than 50% may be included. In this implementation of this application, in the polyethylene resin raw material, mass content of the polyethylene with the crystallinity that is less than 50% may be greater than 5%.

In this implementation of this application, the polyolefin resin raw material may further include heat-resistant resin, and a melting point of the heat-resistant resin is higher than a melting point of the polyethylene. The heat-resistant resin may be one or more of polypropylene, poly 1-butene, poly 1-pentene, poly 1-hexene, poly 4-methyl-1-pentene, poly 1-octene, polyvinyl acetate, polymethyl methacrylate, polystyrene, poly vinylidene fluoride, and polytetrafluoroethylene.

In this implementation of this application, the specific operation of mixing the polyolefin resin raw material and solvent to obtain a mixed liquid may be melting and mixing the polyolefin resin raw material, a solvent with a high boiling point, and an additive at a high temperature in a twin-screw extruder, to form a uniform liquid phase. The solvent with the high boiling point may be an aliphatic hydrocarbon or a cyclic hydrocarbon such as nonane, decane, naphthalene, para-xylene, undecane, dodecane, or liquid paraffin, or may be a mineral oil fraction with a boiling point corresponding to the foregoing solvents. A temperature for mixing needs to be higher than the melting point of the polyolefin, and may be specifically 180°C to 230°C. The additive may be one or more of an antioxidant, a nano inorganic filler, and a nucleating agent. In another implementation, another additive may be alternatively added based on an actual product requirement.

In this implementation of this application, in step S102, the specific operation of extruding the mixed liquid, and cooling and casting the mixed liquid into a sheet may be extruding evenly mixed melt through a slit die head, and cooling and casting the extruded melt on a cooling roll to form a gel-like sheet, where the sheet is in a state in which a liquid phase solvent is separated from a solid-liquid phase of solid-phase polyolefin. A gap of the slit is usually 0.1 mm to 5 mm. When the melt is extruded, a melt temperature is 160°C to 230°C, and an extruding speed may be 0.2 m to 15 m per minute. In this implementation of this application, in the operation of extruding the mixed liquid, and cooling and casting the mixed liquid into a sheet, a cooling speed is greater than 60°C per minute. The cooling speed is quite important to controlling crystallinity of the solid-phase polyolefin in this step. If the cooling speed is excessively low, a quasi-unit cell increases, and the crystallinity increases. If the cooling speed is increased, a small and dense cell unit is formed, helping control crystallinity of the entire solid-phase polyolefin.

In this implementation of this application, when a polyolefin-based porous separator with a multi-layer structure is prepared, it may be obtained in step S102 in an existing manner of performing concurrent extrusion by using a plurality of die heads.

In this implementation of this application, after heated, the gel-like sheet may be formed into a porous structure through the first-time stretching, and mechanical strength is improved. In step S103, the first-time stretching includes stretching in two directions: an MD (longitudinal) and a TD (transverse), and a stretching manner may be selected from any one of bidirectionally synchronous stretching, bidirectionally asynchronous stretching, or bidirectionally combined stretching (a combination of synchronization and asynchronization). In a first-time stretching process, a total stretching multiple of MD × TD is less than or equal to 36. Specifically, the unidirectional stretching multiple in the MD is less than or equal to 6, and the unidirectional stretching multiple in the TD is less than or equal to 6. Further, in the first-time stretching process, the total stretching multiple of MD × TD is less than or equal to 25. Specifically, the unidirectional stretching multiple in the MD is less than or equal to 5, and the unidirectional stretching multiple in the TD is less than or equal to 5. In this application, a stretching multiple in the first-time stretching process is controlled to be a relatively small value, helping obtain a base separator with a high elongation rate. In some implementations of this application, during the first-time stretching, the total stretching multiple of MD × TD may be 12.25 to 23.04, and the unidirectional stretching multiple in the MD or the TD is 3.5 to 4.8. A temperature for stretching may be between a crystal dispersion temperature and a melting point, and may be specifically between 105°C and 135°C. A unidirectional stretching speed in the MD and the TD may be 2% to 70% per second.

In this implementation of this application, the foregoing stretched gel-like sheet is extracted by using an extractant, and a solvent in the sheet is removed to obtain a membrane with a porous structure. A volatile solvent such as dichloromethane, carbon tetrachloride, ether, pentane, or hexane may be used as the extractant.

In this implementation of this application, in step S104, second-time stretching needs to be further performed on the porous membrane obtained after extraction and drying, and the second-time stretching includes stretching in two directions: the MD and the TD. Only the unidirectional stretching in the MD or the TD may be performed, or stretching in both directions may be performed. A unidirectional stretching multiple in the MD is 1 to 2, and a unidirectional stretching multiple in the TD is 1 to 2. A temperature for the second-time stretching is between a crystal dispersion temperature and a melting point, and may be 105°C to 130°C.

In this implementation of this application, heat setting treatment after the second-time stretching may be performed to adjust some physical property parameters of the base separator to some extent, for example, a thermal shrinkage ratio and an air permeability value.

In this implementation of this application, the foregoing preparation method for the battery separator may further include performing treatment of a separator coating layer on the polyolefin-based porous separator. The separator coating layer may include an organic coating layer, an inorganic coating layer, and/or an organic-inorganic composite coating layer. The inorganic coating layer may include a ceramic coating layer, and a material of the ceramic coating layer may be selected from one or more of aluminum oxide, silicon oxide, titanium oxide, zirconium oxide, zinc oxide, barium oxide, magnesium oxide, beryllium oxide, calcium oxide, thorium oxide, aluminum nitride, titanium nitride, boehmite, apatite, aluminum hydroxide, magnesium hydroxide, barium sulfate, boron nitride, silicon carbide, silicon nitride, cubic boron nitride, hexagonal boron nitride, graphite, graphene, and mesoporous molecular sieves (MCM-41 and SBA-15). The organic coating layer may be one or more of an oily polyvinylidene fluoride coating layer, a vinylidene fluoride-hexafluoropropylene copolymer coating layer, a polystyrene coating layer, an aramid coating layer, a polyacrylate coating layer or a polyacrylate-modification coating layer, a polyester coating layer, a polyarylester coating layer, a polyacrylonitrile coating layer, an aromatic polyamide coating layer, a polyimide coating layer, a polyethersulfone coating layer, a polysulfone coating layer, a polyether ether ketone coating layer, a polyetherimide coating layer, and a polybenzimidazole coating layer. The organic-inorganic composite coating layer is prepared by mixing the inorganic coating layer material and the organic coating layer material. Selection of a specific coating layer may be set based on an actual requirement. In a specific implementation of this application, treatment of a double-sided ceramic coating layer is first performed, and then treatment of a double-sided oily polyvinylidene fluoride coating layer is performed on a surface of the ceramic coating layer. A ceramic is of high temperature resistance and may improve heat resistance of the separator. The polyvinylidene fluoride has specific adhesive performance, and therefore may improve an adhesive force between the separator and the positive and negative electrode films, improve hardness of the battery cell, and further improve the pass rate of the battery cell in the nail penetration test. Certainly, in some other implementations of this application, the oily polyvinylidene fluoride coating layer may be alternatively directly applied to a surface of the base separator. In this implementation of this application, the thickness of the separator coating layer may be 0.5 µm to 10 µm.

An embodiment of this application further provides a battery, including a positive electrode, a negative electrode, and a separator and an electrolyte that are located between the positive electrode and the negative electrode. The separator includes a battery separator provided in the foregoing embodiments of this application. In this implementation of this application, the battery may be a lithium-ion battery. The battery provided in this embodiment of the present invention may be used in terminal consumer products such as a mobile phone, a tablet computer, a mobile power supply, a portable computer, a notebook computer, and another wearable or removable electronic device, to improve product safety and reliability.

In this implementation of this application, the positive electrode may include an anode current collector and an anode active material layer that is disposed on the anode current collector, and the anode active material layer includes an anode active material. The anode active material may be but is not limited to a composite metal oxide (for example, lithium nickel cobalt manganese oxide) of lithium, a polyanionic lithium compound LiMₓ (PO₄)_{y} (M is Ni, Co, Mn, Fe, Ti, and V; 0 ≤ x ≤ 5; 0 ≤ y ≤ 5), and the like. The negative electrode may include a cathode current collector and a cathode active material layer that is disposed on the cathode current collector, and the cathode active material layer includes a cathode active material. The cathode active material includes but is not limited to one or more of metallic lithium, a lithium alloy, lithium titanate, natural graphite, artificial graphite, an MCMB, amorphous carbon, carbon fiber, a carbon nanotube, hard carbon, soft carbon, graphene, a graphene oxide, silicon, a silicon carbon compound, a silicon oxide compound, and a silicon metals compound. In this implementation of this application, the lithium-ion battery may be prepared based on an existing technology.

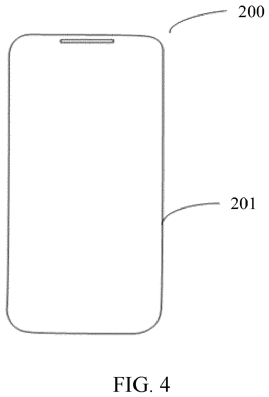

As shown in FIG. 4, an embodiment of this application further provides a terminal. The terminal 200 may be a mobile phone, or may be an electronic product such as a tablet computer, a mobile power supply, a notebook computer, a portable computer, or an intelligent wearable product, including a housing 201 and a display module, an electronic component module, and a battery (not shown in the figure) that are accommodated in the housing 201. The battery supplies power to the display module and the electronic component module, the battery is a battery provided in the foregoing embodiments of the present invention. The housing 201 may include a front cover assembled on a front side of the terminal and a rear shell assembled on a rear side, and the battery may be fastened on an inner side of the rear shell.

Embodiments of the present invention are further described below by using specific embodiments.

### Embodiment 1

### 1. Battery separator preparation

Single polyethylene resin with mass average molecular weight Mw of 600 thousand and crystallinity of 54% is used as a resin raw material, resin and paraffin oil are melted and mixed at a mass ratio of 25:75 at a temperature of 200°C in a twin-screw extruder, and 0.3% of an antioxidant is added during the mixing. Evenly mixed melt is extruded through a slit die head and cast into a sheet. An extrusion speed of the melt through the die head is 5 m per minute, and a cooling speed of a cast sheet is 80°C per minute. Asynchronous (non-synchronous) first-time bidirectional stretching is performed on a gel sheet at 116°C, a stretching multiple in each of an MD direction and a TD direction is 4.5, and a stretching speed in each of the MD direction and the TD direction is 30% per second. A membrane obtained after first-time stretching is extracted by using dichloromethane, to remove a paraffin oil component. Second-time stretching is performed on an extracted membrane at 125°C, the second-time stretching is performed only in the TD direction, and a stretching multiple is 1.1. Finally, a polyolefin-based porous separator is made after heat setting.

Double-sided Al₂O₃ ceramic coating layer treatment and double-sided oily PVDF coating layer treatment are performed on the polyolefin-based porous separator with a thickness of 5 µm, to obtain the battery separator. A thickness of a single ceramic coating layer (a heat-resistant layer) is 1 µm, and a thickness of a single oily PVDF coating layer (an adhesive layer) is 1 µm.

### 2. Battery preparation

Preparation of a positive electrode film: Lithium cobaltate of an anode active material, a conductive agent SP, and an adhesive agent PVDF are evenly stirred and mixed in an NMP solvent at a ratio of 97:1.5:1.5, to form an anode slurry. The anode slurry is evenly coated on both sides of aluminum foil by using a coating device, and is dried by using an oven to remove the NMP solvent. A coated electrode film is made into the positive electrode film through processes of cold pressing, striping, and tab welding.

Preparation of a negative electrode film: Artificial graphite of a cathode active material, thickener CMC, and an adhesive SBR are evenly stirred and mixed in deionized water at a weight ratio of 97:1.3:1.7, to form a cathode slurry. The cathode slurry is evenly coated on both sides of copper foil by using the coating device. An electrode film that is dried by using the oven is made into the negative electrode film through the processes of cold pressing, striping, and tab welding.

The positive electrode film, the negative electrode film, and the battery separator in Embodiment 1 are wound together to form a bare battery cell. A capacity of the battery cell is 4.5 Ah, and a working voltage range of the battery cell is 3.0 V to 4.45 V The battery cell is made into a lithium-ion battery through processes such as packaging, baking, liquid injection, and chemical conversion.

### Embodiment 2

Single polyethylene resin with mass average molecular weight Mw of 600 thousand and crystallinity of 54% is used as a resin raw material, resin and paraffin oil are melted and mixed at a mass ratio of 25:75 at a temperature of 200°C in a twin-screw extruder, and 0.3% of an antioxidant is added during the mixing. Evenly mixed melt is extruded through a slit die head and cast into a sheet. An extrusion speed of the melt through the die head is 5.5 m per minute, and a cooling speed of a cast sheet is 80°C per minute. Asynchronous first-time bidirectional stretching is performed on a gel sheet at 118°C, a stretching multiple in each of an MD direction and a TD direction is 4, and a stretching speed in each of the MD direction and the TD direction is 33% per second. A membrane obtained after first-time stretching is extracted by using dichloromethane, to remove a paraffin oil component. Second-time stretching is performed on an extracted membrane at 126°C, the second-time stretching is performed only in the TD direction, and a stretching multiple is 1.1. Finally, a polyolefin-based porous separator is made after heat setting.

Battery preparation is the same as that in Embodiment 1.

### Embodiment 3

50% of mass of polyethylene resin A with mass average molecular weight (Mw) of 600 thousand and crystallinity of 60% and 50% of mass of polyethylene resin B with Mw of 200 thousand and crystallinity of 40% are used as a resin raw material. The polyethylene resin composition and paraffin oil are melted and mixed at a mass ratio of 28:72 at a temperature of 200°C in a twin-screw extruder, and 0.3% of antioxidant is added during the mixing. Evenly mixed melt is extruded through a slit die head and cast into a sheet. An extrusion speed of the melt through the die head is 5 m per minute, and a cooling speed of a cast sheet is 80°C per minute. Asynchronous first-time bidirectional stretching is performed on a gel sheet at 116°C, a stretching multiple in each of an MD direction and a TD direction is 4, and a stretching speed in each of the MD direction and the TD direction is 30% per second. A membrane obtained after first-time stretching is extracted by using dichloromethane, to remove a paraffin oil component. Second-time stretching is performed on an extracted membrane at 125°C, the second-time stretching is performed only in the TD direction, and a stretching multiple is 1.1. Finally, a poly olefin-based porous separator is made after heat setting.

Battery preparation is the same as that in Embodiment 1.

### Embodiment 4

50% of mass of polyethylene resin A with mass average molecular weight (Mw) of 600 thousand and crystallinity of 54%, 40% of mass of polyethylene resin B with Mw of 200 thousand and crystallinity of 40%, and 10% of mass of polypropylene (PP) heat-resistant resin C are used as a resin raw material. The resin composition and paraffin oil are melted and mixed at a mass ratio of 30:70 at a temperature of 200°C in a twin-screw extruder, and 0.3% of antioxidant is added during the mixing. Evenly mixed melt is extruded through a slit die head and cast into a sheet. An extrusion speed of the melt through the die head is 5 m per minute, and a cooling speed of a cast sheet is 80°C per minute. Asynchronous first-time bidirectional stretching is performed on a gel sheet at 116°C, a stretching multiple in each of an MD direction and a TD direction is 4, and a stretching speed is 30% per second. A membrane obtained after first-time stretching is extracted by using dichloromethane, to remove a paraffin oil component. Second-time stretching is performed on an extracted membrane at 125°C, the second-time stretching is performed only in the TD direction, and a stretching multiple is 1.1. Finally, a polyolefin-based porous separator is made after heat setting.

Battery preparation is the same as that in Embodiment 1.

### Embodiment 5

Battery separator preparation: Base separator preparation is the same as that in Embodiment 4. After a base separator is prepared, double-sided oily PVDF+Al₂O₃ mixed coating layer treatment is performed on the base separator with a thickness of 5 µm, to obtain a battery separator, and a thickness of a single coating layer is 1.5 µm.

Battery preparation is the same as that in Embodiment 1.

### Embodiment 6

Battery separator preparation: Base separator preparation is the same as that in Embodiment 4. After a base separator is prepared, single-sided Al₂O₃ ceramic coating layer treatment and double-sided oily PVDF coating layer treatment are performed on the base separator with a thickness of 5 µm. A thickness of a single ceramic coating layer is 1 µm, and a thickness of a single oily PVDF coating layer is 1 µm.

Battery preparation is the same as that in Embodiment 1.

### Comparative embodiment

Battery separator preparation: Only polyethylene resin A with Mw of 600 thousand and crystallinity of 60% is used as a resin raw material. In a base separator manufacturing technology, polyethylene solution concentration is 25%, a cooling speed of a cast sheet is 70°C per minute, a multiple of first-time stretching in each of an MD direction and a TD direction is 7, and a multiple of second-time stretching in the TD direction is 1.4. Another manufacturing parameter is the same as that in Embodiment 1.

Battery preparation is the same as that in Embodiment 1.

The following tests are performed on the base separator and the battery that are prepared in the comparative embodiment and Embodiment 1 of the present invention:
1. Elongation rate test for the base separator: The base separator is cut out, in each of the MD direction and the TD direction, to obtain a small strip with a width of 15 mm and a length greater than 50 mm (for example, 100 mm). If an elongation rate in the MD direction is tested, the width of 15 mm refers to the TD direction of the base separator, and the length of 100 mm refers to the MD direction of the base separator. If an elongation rate in the TD direction is tested, the width of 15 mm refers to the MD direction of the base separator, and the length of 100 mm refers to the TD direction of the base separator. A tensile test is performed on the small strip by using a multi-functional tensile testing machine, and a test condition is that a width of a sample is 15 mm, a length of the base separator between an upper fixture and a lower fixture before the test is fixed at 50 mm, and is recorded as L0 (a length of a cut sample is greater than 50 mm, to help a fixture clamp the separator sample). A stretching speed of the tensile testing machine is set to 100 mm per minute. The sample starts to be stretched until the sample just breaks. In this case, a distance between the fixtures is recorded as L1 and the elongation rate is equal to (L1 - L0)/L0.
2. Thickness test for the base separator: A ten-thousandths thickness gauge is used to test thicknesses of at least 10 points in the TD direction of the base separator, and an average of the thicknesses of the at least 10 points is used as the thickness of the base separator.
3. Separator crystallinity test: The base separator sample is heated to 200°C by using a differential scanning calorimeter (DSC) at a speed of 10°C per minute in a nitrogen atmosphere (in this process, the base separator is melted and absorbs heat, and measured melting heat absorption is divided by standard melting heat absorption to obtain crystallinity at a first-time temperature rise). Heat preservation is performed on the sample at 200°C for three minutes (in this case, the base separator is completely melted into a polyethylene resin raw material, and a stress that is produced when the polyethylene resin is processed into the base separator is completely removed). Then, the sample is cooled to 40°C at the speed of 10°C per minute and heat preservation is performed for three minutes (in this process, the polyethylene resin raw material is crystallized without an action of an external stress). Then, the sample is heated to 200°C at the speed of 10°C per minute (in this process, the base separator sample is melted for the second time, to obtain crystallinity at a second-time temperature rise, which actually represents crystallinity of the polyethylene resin raw material). Therefore, a difference in crystallinity between two initially consecutive temperature rises of the base separator represents an increase in crystallinity caused by an external temperature and stress in a process in which the polyethylene resin raw material is processed into the base separator.
4. Test of a temperature of closing a pore: The test is performed by using a temperature-rising internal resistance method. The separator is placed in a stainless steel fixture or another similar fixture, and an appropriate amount of electrolyte is injected into the fixture. The fixture is placed in an oven, and is heated at a specific speed. Resistance and a temperature of the fixture are monitored at the same time, and a temperature at which the resistance increases abruptly (by 50 times) is the temperature of closing a pore of the separator.
5. Test of a temperature of breaking a separator: A test time is prolonged based on the test of the temperature of closing a pore, and a temperature at which the resistance decreases abruptly is the temperature of breaking the separator.
6. Battery safety test
6.1 Nail penetration test: After the battery is fully charged in a standard charging mode, the test is performed within 24 hours. A battery cell is placed on a plane, and is pierced vertically by using a steel nail with a diameter of 3 mm at a speed of 150 mm per second. After the steel nail pierces the battery cell, this situation is kept for five minutes, or when the battery cell indicates that the temperature decreases to 50°C, the test is stopped. If the battery cell does not ignite or explode, the battery cell passes the test.
6.2 Impact test: After the battery is fully charged in a standard charging mode, the test is performed within 24 hours. The battery cell is placed on a plane, a steel column with a diameter of 15.8 mm ± 0.1 mm is placed in the center of the battery, and a longitudinal axis of the steel column is parallel to the plane. The steel column may be fastened by using fixtures on both a left side and a right side, but an object with a cushioning function such as a sponge is not allowed to be used under the steel column for fastening. A heavy weight of 9.1 kg ± 0.46 kg freely drops from a height of 610 mm ± 25 mm above a tested battery cell to the battery cell. The drop height is a distance from a bottom side of the heavy weight for impact to a surface of the sample. If the battery cell does not ignite or explode, the battery cell passes the test.
6.3 Heating test: After the battery is fully charged in a standard charging mode, the test is performed within 12 hours to 24 hours. A convection manner or a cycle hot air oven is used for heating at an initial temperature 25°C ± 3°C. With a temperature change rate of 5°C ± 2°C per minute, the temperature rises to 140°C ± 2°C, which is kept for 30 minutes, and then the test is finished. If the battery cell does not ignite or explode, the battery cell passes the test.
6.4 Overcharge test: The battery is tested and discharged, and then is put into an explosion-proof box. A thermocouple is well connected (a contact of the thermocouple is fastened to a center part of a surface of the battery cell), and a power supply is connected for charging. The battery is charged to 4.6 V at a 3C steady current until a voltage reaches a maximum value. The test is stopped when any one of the following conditions is met: (a) A continuous charging time reaches 7 hours. (b) A temperature of the battery cell decreases to a value that is 20% lower than a peak value. If the battery cell does not ignite or explode, the battery cell passes the test.

The foregoing test results are listed in Table 1:

| | | | Embodiment 1 | Embodiment 2 | Embodiment 3 | Embodiment 4 | Embodiment 5 | Embodiment 6 | Comparative embodiment |
|---|---|---|---|---|---|---|---|---|---|
| Resin raw material | Polyethylene resin A | Mw | 600 thousand | 600 thousand | 600 thousand | 600 thousand | 600 thousand | 600 thousand | 600 thousand |
| | | Mass proportion | 100 | 100 | 50 | 50 | 50 | 50 | 100 |
| | | Crystallinity | 54% | 54% | 60% | 60% | 60% | 60% | 60% |
| | Polyethylene resin B | Mw | - | - | 200 thousand | 200 thousand | 200 thousand | 200 thousand | - |
| | | Mass proportion | - | - | 50 | 40 | 40 | 40 | - |
| | | Crystallinity | - | - | 40% | 40% | 40% | 40% | - |
| | Heat-resistant resin C | Resin type | - | - | - | PP | PP | PP | - |
| | | Mass proportion | - | - | - | 10% | 10% | 10% | - |
| Base separator manufacturing | Polyolefin solution concentration | Mass proportion | 25 | 25 | 28 | 30 | 30 | 30 | 25 |
| | Extrusion speed through a die head | m/min | 5 | 5.5 | 5 | 5 | 5 | 5 | 5 |
| | Cooling speed of a cast sheet | °C/min | 80 | 80 | 80 | 80 | 80 | 80 | 70 |
| | First -time stretching multiple (MD × TD) | | 4.5 × 4.5 | 4 × 4 | 4 × 4 | 4 × 4 | 4 × 4 | 4 × 4 | 7x7 |
| | First -time stretching temperature | °C | 116 | 118 | 116 | 116 | 116 | 116 | 116 |
| | First -time stretching speed | %/s | 30% | 33% | 30% | 30% | 30% | 30% | 30% |
| | Second-time stretching direction | | TD | TD | TD | TD | TD | TD | TD |
| | Second-time stretching temperature | °C | 125 | 126 | 125 | 125 | 125 | 125 | 125 |
| | Second-time stretching multiple | | 1.1 | 1.1 | 1.1 | 1.1 | 1.1 | 1.1 | 1.4 |
| Physical property of a base separator | Crystallinity at a first -time temperature rise | | 62% | 60% | 58% | 60% | 60% | 60% | 75% |
| | Crystallinity at a second-time temperature rise | | 54% | 54% | 50% | 52% | 52% | 52% | 60% |
| | Difference in crystallinity | % | 8% | 6% | 8% | 8% | 8% | 8% | 15% |
| | Thickness | µm | 5 | 5 | 5 | 5 | 5 | 5 | 5 |
| | Air permeability value | s/100 cc | 180 | 190 | 200 | 200 | 200 | 200 | 140 |
| | Puncture strength | g | 220 | 210 | 200 | 200 | 200 | 200 | 300 |
| | Elongation rate (MD) | % | 210 | 220 | 220 | 220 | 220 | 220 | 100 |
| | Elongation rate (TD) | % | 190 | 200 | 200 | 200 | 200 | 200 | 80 |
| | Temperature of closing a pore | °C | 140 | 139 | 133 | 134 | 134 | 134 | 143 |
| | Temperature of breaking a separator | °C | 150 | 150 | 150 | 160 | 160 | 160 | 150 |
| Coating layer treatment | Heat-resistant layer | Treatment manner | Double-sided, 1 µm/side | Double-sided, 1 µm/side | Double-sided, 1 µm/side | Double-sided, 1 µm/side | - | Single-sided, 1 µm/side | Double-sided, 1 µm/side |
| | | Coating layer material | Al₂O₃ | Al₂O₃ | Al₂O₃ | Al₂O₃ | - | Al₂O₃ | Al₂O₃ |
| | Adhesive layer | Treatment manner | Double-sided, 1 µm/side | Double-sided, 1 µm/side | Double-sided, 1 µm/side | Double-sided, 1 µm/side | Double-sided, 1.5 µm/side | Double-sided, 1 µm/side | Double-sided, 1 µm/side |
| | | Coating layer material | Oily PVDF | Oily PVDF | Oily PVDF | Oily PVDF | Oily PVDF+Al₂O₃ | Oily PVDF | Oily PVDF |
| Battery test | Pass rate of a nail penetration test | % | 80 | 90 | 90 | 100 | 90 | 95 | 40 |
| | Pass rate of an impact test | % | 80 | 90 | 90 | 100 | 90 | 95 | 30 |
| | Pass rate of a heating test | % | 10 | 30 | 50 | 100 | 50 | 70 | 0 |
| | Pass rate of an overcharge test | % | 30 | 40 | 80 | 100 | 80 | 90 | 30 |

It can be learned from the foregoing test results that in Embodiment 1, the single polyethylene resin raw material with crystallinity of 54% is used, the increase in crystallinity is controlled to be at a level of 8% by using a technology, and finally first-time crystallinity of a finished separator is 62%. In the comparative embodiment, the polyethylene resin raw material with crystallinity of 60% is used, the increase in crystallinity in a processing procedure is 15%, and first-time crystallinity of a finished separator is 75%. An elongation rate of the base separator in Embodiment 1 is 210% in the MD direction and 190% in the TD direction, which are significantly higher than 100% and 80% in the comparative embodiment, respectively. Therefore, in mechanical abuse tests such as the nail penetration test and the impact test, in Embodiment 1, there is a significant advantage with respective pass rates of 80%, whereas the respective pass rates in the comparative embodiment are only 40% and 30%.

In Embodiment 2, increase levels of the first-time crystallinity and second-time crystallinity are further reduced on the basis of Embodiment 1, and reach 6%, and therefore the elongation rate of the base separator is further improved, and the pass rates of the nail penetration test and the impact test are increased to 90%. In addition, the temperature of closing a pore of the base separator is reduced to 139°C, and therefore thermal abuse tests such as the heating test and the overcharge test are improved to some extent, and respective pass rates reach 30% and 40%.

In Embodiment 3, the crystallinity is controlled in terms of a raw material and a part of the polyethylene resin raw material B with relatively low crystallinity (40%) is used. It can be learned from the crystallinity at the second-time temperature rise of the base separator, namely, the crystallinity of the raw material, that the crystallinity (combination) of the raw material in Embodiment 3 is 50%, which is lower than 60% in the comparative embodiment. In addition, in Embodiment 3, a relatively low stretching multiple is used in terms of the technology: The first-time stretching multiple in each of the MD and the TD is 4, and the second-time stretching multiple in the TD is 1.1, which are lower than 7 and 1.4 in the comparative embodiment, respectively. In this way, an increase in crystallinity of the polyethylene resin is controlled in the processing procedure, that is, the difference in the crystallinity in Embodiment 3 is controlled to be 8%, whereas the difference in the crystallinity in the comparative embodiments is 15%. In Embodiment 3, the crystallinity is controlled from two dimensions of the raw material and the technology, so that the crystallinity of the base separator is at a relatively low level. In Embodiment 3, the crystallinity at the first-time temperature rise of the base separator is 58%, which is significantly lower than 75% in the comparative embodiment. Low crystallinity enables the base separator to have better ductility. Specifically, in Embodiment 3, the elongation rates in the MD direction and the TD direction are respectively 220% and 200%, which are significantly higher than 100% and 80% in the comparative embodiment. The property of the high elongation rate of the base separator enables the battery cell to have a higher pass rate when the battery cell is mechanically abused. Therefore, in Embodiment 3, the pass rates in the nail penetration test and the impact test both reach 90%, whereas the pass rates in the comparative embodiment are only 40% and 30%, respectively. In addition, because the raw material B with the crystallinity that is less than 50% is used, the temperature of closing a pore of the base separator is reduced to 133°C, which is significantly lower than 143°C in the comparative embodiment. Therefore, the battery cell prepared by using the base separator is significantly improved in the thermal abuse tests such as the heating test and the overcharge test.

In Embodiment 4, a heat-resistant resin material of polypropylene (PP) is added on the basis of Embodiment 3, and an obtained base separator has a high elongation rate (an elongation rate 220% in the MD and an elongation rate 200% in the TD), a low temperature (136°C) of closing a pore, and a high temperature (160°C) of breaking the separator. Therefore, the pass rate of the battery cell prepared by using the separator in each of abuse tests such as the nail penetration test, the impact test, the heating test, and the overcharge test reaches 100%, thereby comprehensively improving the safety of the battery cell.

In Embodiment 5, the separator coating layer is replaced with the double-sided oily PVDF+Al₂O₃ mixed coating layer on the basis of Embodiment 4. A heat-resistant ceramic layer is removed, so that heat resistance of the separator is reduced, and the pass rate of the separator in the battery cell abuse test is reduced, which, however, are still significantly better than those in the comparative embodiment.

In Embodiment 6, only the single-sided heat-resistant ceramic coating layer is used on the basis of Embodiment 4. The heat resistance of the separator is reduced, and the pass rate of the separator in the battery cell abuse test is reduced, which, however, are still significantly better than those in the comparative embodiment.

In embodiments of this application, the raw material and the technology for manufacturing the separator are optimized, so that the crystallinity of the base separator is controlled to achieve a purpose of the high elongation rate of the separator. No additional process or device is required, and an existing production line for a commercial separator may be fully used. Therefore, there are producibility and practicality.

## Claims

1. A battery separator, comprising: a polyolefin-based porous separator, wherein the polyolefin-based porous separator comprises polyethylene resin, an elongation rate of the polyolefin-based porous separator in an MD direction is greater than 120%, an elongation rate in a TD direction is greater than 120%, and for the polyolefin-based porous separator, crystallinity at a first-time temperature rise of polyethylene that is measured by using a differential scanning calorimeter is less than 65%, and crystallinity at a second-time temperature rise is less than 55%.

2. The battery separator according to claim 1, wherein a difference between the crystallinity at the first-time temperature rise and the crystallinity at the second-time temperature rise is less than 18%.

3. The battery separator according to claim 1 or 2, wherein a temperature of closing a pore of the polyolefin-based porous separator is less than or equal to 140°C.

4. The battery separator according to any one of claims 1 to 3, wherein a temperature of breaking a separator of the polyolefin-based porous separator is greater than or equal to 150°C.

5. The battery separator according to any one of claims 1 to 4, wherein a polyethylene resin raw material for preparing the polyolefin-based porous separator comprises polyethylene resin with crystallinity that is less than 50%.

6. The battery separator according to any one of claims 1 to 5, wherein the polyolefin-based porous separator further comprises heat-resistant resin, and a melting point of the heat-resistant resin is higher than a melting point of the polyethylene resin.

7. The battery separator according to claim 6, wherein the heat-resistant resin comprises one or more of polypropylene, poly 1-butene, poly 1-pentene, poly 1-hexene, poly 4-methyl-1-pentene, poly 1-octene, polyvinyl acetate, polymethyl methacrylate, polystyrene, poly vinylidene fluoride, and polytetrafluoroethylene.

8. The battery separator according to any one of claims 1 to 7, wherein a test method for measuring the crystallinity at the first-time temperature rise and the crystallinity at the second-time temperature rise by using the differential scanning calorimeter is that the polyolefin-based porous separator is heated above a melting point of the polyethylene at a speed of 10°C per minute for the first time, heat preservation is performed for three minutes, to obtain the crystallinity at the first-time temperature rise of the polyethylene, the polyolefin-based porous separator is cooled to a temperature that is less than or equal to 40°C at the speed of 10°C per minute, heat preservation is performed for three minutes, and the polyolefin-based porous separator is again heated above the melting point of the polyethylene at the speed of 10°C per minute for the second time, to obtain the crystallinity at the second-time temperature rise of the polyethylene.

9. The battery separator according to any one of claims 1 to 8, wherein in the polyolefin-based porous separator, a mass proportion of the polyethylene resin is greater than or equal to 70%.

10. The battery separator according to any one of claims 1 to 9, wherein the polyolefin-based porous separator is a single-layer structure or a multi-layer structure.

11. The battery separator according to any one of claims 1 to 10, wherein a thickness of the polyolefin-based porous separator is 1 µm to 14 µm.

12. The battery separator according to any one of claims 1 to 11, wherein porosity of the polyolefin-based porous separator is 20% to 60%.

13. The battery separator according to any one of claims 1 to 12, wherein an air permeability value of the polyolefin-based porous separator is greater than or equal to 50 sec/100 cc.

14. The battery separator according to any one of claims 1 to 13, wherein the battery separator further comprises a separator coating layer that is disposed on a surface on one side or two sides of the polyolefin-based porous separator.

15. The battery separator according to claim 14, wherein the separator coating layer comprises an organic coating layer, an inorganic coating layer, and/or an organic-inorganic composite coating layer.

16. The battery separator according to claim 15, wherein the inorganic coating layer comprises a ceramic coating layer, and a material of the ceramic coating layer is selected from one or more of aluminum oxide, silicon oxide, titanium oxide, zirconium oxide, zinc oxide, barium oxide, magnesium oxide, beryllium oxide, calcium oxide, thorium oxide, aluminum nitride, titanium nitride, boehmite, apatite, aluminum hydroxide, magnesium hydroxide, barium sulfate, boron nitride, silicon carbide, silicon nitride, cubic boron nitride, hexagonal boron nitride, graphite, graphene, and mesoporous molecular sieves.

17. The battery separator according to claim 15, wherein the organic coating layer is selected from one or more of an oily polyvinylidene fluoride coating layer, a vinylidene fluoride-hexafluoropropylene copolymer coating layer, a polystyrene coating layer, an aramid coating layer, a polyacrylate coating layer or a polyacrylate-modification coating layer, a polyester coating layer, a polyarylester coating layer, a polyacrylonitrile coating layer, an aromatic polyamide coating layer, a polyimide coating layer, a polyethersulfone coating layer, a polysulfone coating layer, a polyether ether ketone coating layer, a polyetherimide coating layer, and a polybenzimidazole coating layer.

18. The battery separator according to any one of claims 14 to 17, wherein the thickness of the separator coating layer is 0.5 µm to 10 µm.

19. A preparation method for a battery separator, comprising:
mixing a polyolefin resin raw material and solvent to obtain a mixed liquid, wherein the polyolefin resin raw material comprises a polyethylene resin raw material, and crystallinity measured after the polyethylene resin raw material is mixed together is less than 55%;
extruding the mixed liquid, and cooling and casting the mixed liquid into a sheet;
forming a porous membrane after first-time stretching, extraction, and drying of the sheet; and
obtaining the polyolefin-based porous separator after second-time stretching and heat setting of the porous membrane, and controlling, in a processing procedure in which the polyolefin-based porous separator is prepared by using the polyolefin resin raw material, an increase in crystallinity from the polyolefin resin raw material to a finished base separator to be less than 12%, crystallinity at a first-time temperature rise of polyethylene measured by using a differential scanning calorimeter for the obtained polyolefin-based porous separator to be less than 65%, and crystallinity at a second-time temperature rise of the polyethylene measured by using the differential scanning calorimeter for the obtained polyolefin-based porous separator to be less than 55%.

20. The preparation method for a battery separator according to claim 19, wherein a difference between the crystallinity at the first-time temperature rise and the crystallinity at the second-time temperature rise is less than 18%.

21. The preparation method for a battery separator according to claim 19 or 20, wherein in the polyethylene resin raw material, the polyethylene resin raw material comprises polyethylene resin with crystallinity that is less than 50%.

22. The preparation method for a battery separator according to any one of claims 19 to 21, wherein the polyolefin resin raw material further comprises heat-resistant resin, and a melting point of the heat-resistant resin is higher than a melting point of the polyethylene resin.

23. The preparation method for a battery separator according to any one of claims 19 to 22, wherein the first-time stretching comprises stretching in two directions: an MD and a TD, and a total stretching multiple of MD × TD is less than or equal to 36.

24. The preparation method for a battery separator according to claim 23, wherein a unidirectional stretching multiple in the MD is less than or equal to 6, and a unidirectional stretching multiple in the TD is less than or equal to 6.

25. The preparation method for a battery separator according to claim 23, wherein a stretching temperature of the first-time stretching is 105°C to 135°C, and a unidirectional stretching speed in the MD or the TD is 2% to 70% per second.

26. The preparation method for a battery separator according to any one of claims 19 to 25, wherein the second-time stretching comprises two stretching directions: an MD and a TD, a unidirectional stretching multiple in the MD is 1 to 2, and a unidirectional stretching multiple in the TD is 1 to 2.

27. The preparation method for a battery separator according to any one of claims 19 to 26, wherein in the operation of extruding the mixed liquid, and cooling and casting the mixed liquid into a sheet, a cooling speed is greater than 60°C per minute.

28. A battery, comprising a positive electrode, a negative electrode, and a separator and an electrolyte that are located between the positive electrode and the negative electrode, wherein the separator comprises the battery separator according to any one of claims 1 to 18.

29. The battery according to claim 28, wherein the battery comprises a lithium-ion battery.

30. A terminal, comprising a housing, and a display module, an electronic component module, and a battery that are accommodated in the housing, wherein the battery supplies power to the display module and the electronic component module, and the battery comprises the battery according to claim 28 or 29.

## Amended claims

### Amended claims under Art. 19.1 PCT

1. A battery separator, comprising: a polyolefin-based porous separator, wherein the polyolefin-based porous separator comprises polyethylene resin, an elongation rate of the polyolefin-based porous separator in an MD direction is greater than 120%, an elongation rate in a TD direction is greater than 120%, and for the polyolefin-based porous separator, crystallinity at a first-time temperature rise of polyethylene that is measured by using a differential scanning calorimeter is less than 65%, and crystallinity at a second-time temperature rise is less than 55%.

2. The battery separator according to claim 1, wherein a difference between the crystallinity at the first-time temperature rise and the crystallinity at the second-time temperature rise is less than 12%.

3. The battery separator according to claim 1, wherein a difference between the crystallinity at the first-time temperature rise and the crystallinity at the second-time temperature rise is greater than or equal to 12% and less than 18%.

4. The battery separator according to any one of claims 1 to 3, wherein a temperature of closing a pore of the polyolefin-based porous separator is less than or equal to 140°C.

5. The battery separator according to any one of claims 1 to 4, wherein a temperature of breaking a separator of the polyolefin-based porous separator is greater than or equal to 150°C.

6. The battery separator according to any one of claims 1 to 5, wherein a polyethylene resin raw material for preparing the polyolefin-based porous separator comprises polyethylene resin with crystallinity that is less than 50%.

7. The battery separator according to any one of claims 1 to 6, wherein the polyolefin-based porous separator further comprises heat-resistant resin, and a melting point of the heat-resistant resin is higher than a melting point of the polyethylene resin.

8. The battery separator according to claim 7, wherein the heat-resistant resin comprises one or more of polypropylene, poly 1-butene, poly 1-pentene, poly 1-hexene, poly 4-methyl-1-pentene, poly 1-octene, polyvinyl acetate, polymethyl methacrylate, polystyrene, poly vinylidene fluoride, and polytetrafluoroethylene.

9. The battery separator according to any one of claims 1 to 8, wherein a test method for measuring the crystallinity at the first-time temperature rise and the crystallinity at the second-time temperature rise by using the differential scanning calorimeter is that the polyolefin-based porous separator is heated above a melting point of the polyethylene at a speed of 10°C per minute for the first time, heat preservation is performed for three minutes, to obtain the crystallinity at the first-time temperature rise of the polyethylene, the polyolefin-based porous separator is cooled to a temperature that is less than or equal to 40°C at the speed of 10°C per minute, heat preservation is performed for three minutes, and the polyolefin-based porous separator is again heated above the melting point of the polyethylene at the speed of 10°C per minute for the second time, to obtain the crystallinity at the second-time temperature rise of the polyethylene.

10. The battery separator according to any one of claims 1 to 9, wherein in the polyolefin-based porous separator, a mass proportion of the polyethylene resin is greater than or equal to 70%.

11. The battery separator according to any one of claims 1 to 10, wherein the polyolefin-based porous separator is a single-layer structure or a multi-layer structure.

12. The battery separator according to any one of claims 1 to 11, wherein a thickness of the polyolefin-based porous separator is 1 µm to 14 µm.

13. The battery separator according to any one of claims 1 to 12, wherein porosity of the polyolefin-based porous separator is 20% to 60%.

14. The battery separator according to any one of claims 1 to 13, wherein an air permeability value of the polyolefin-based porous separator is greater than or equal to 50 sec/100 cc.

15. The battery separator according to any one of claims 1 to 14, wherein the battery separator further comprises a separator coating layer that is disposed on a surface on one side or two sides of the polyolefin-based porous separator.

16. The battery separator according to claim 15, wherein the separator coating layer comprises an organic coating layer, an inorganic coating layer, and/or an organic-inorganic composite coating layer.

17. The battery separator according to claim 16, wherein the inorganic coating layer comprises a ceramic coating layer, and a material of the ceramic coating layer is selected from one or more of aluminum oxide, silicon oxide, titanium oxide, zirconium oxide, zinc oxide, barium oxide, magnesium oxide, beryllium oxide, calcium oxide, thorium oxide, aluminum nitride, titanium nitride, boehmite, apatite, aluminum hydroxide, magnesium hydroxide, barium sulfate, boron nitride, silicon carbide, silicon nitride, cubic boron nitride, hexagonal boron nitride, graphite, graphene, and mesoporous molecular sieves.

18. The battery separator according to claim 16, wherein the organic coating layer is selected from one or more of an oily polyvinylidene fluoride coating layer, a vinylidene fluoride-hexafluoropropylene copolymer coating layer, a polystyrene coating layer, an aramid coating layer, a polyacrylate coating layer or a polyacrylate-modification coating layer, a polyester coating layer, a polyarylester coating layer, a polyacrylonitrile coating layer, an aromatic polyamide coating layer, a polyimide coating layer, a polyethersulfone coating layer, a polysulfone coating layer, a polyether ether ketone coating layer, a polyetherimide coating layer, and a polybenzimidazole coating layer.

19. The battery separator according to any one of claims 15 to 18, wherein the thickness of the separator coating layer is 0.5 µm to 10 µm.

20. A preparation method for a battery separator, comprising:
mixing a polyolefin resin raw material and solvent to obtain a mixed liquid, wherein the polyolefin resin raw material comprises a polyethylene resin raw material, and crystallinity measured after the polyethylene resin raw material is mixed together is less than 55%;
extruding the mixed liquid, and cooling and casting the mixed liquid into a sheet;
forming a porous membrane after first-time stretching, extraction, and drying of the sheet; and
obtaining the polyolefin-based porous separator after second-time stretching and heat setting of the porous membrane, wherein crystallinity at a first-time temperature rise of polyethylene measured by using a differential scanning calorimeter for the obtained polyolefin-based porous separator is less than 65%, and crystallinity at a second-time temperature rise of the polyethylene measured by using the differential scanning calorimeter for the obtained polyolefin-based porous separator is less than 55%.

21. The preparation method for a battery separator according to claim 20, wherein in a processing procedure in which the polyolefin-based porous separator is prepared by using the polyolefin resin raw material, an increase in crystallinity from the polyolefin resin raw material to a finished base separator is controlled to be less than 12%.

22. The preparation method for a battery separator according to claim 20, wherein in a processing procedure in which the polyolefin-based porous separator is prepared by using the polyolefin resin raw material, an increase in crystallinity from the polyolefin resin raw material to a finished base separator is controlled to be greater than or equal to 12% and less than 18%.

23. The preparation method for a battery separator according to any one of claims 20 to 22, wherein in the polyethylene resin raw material, the polyethylene resin raw material comprises polyethylene resin with crystallinity that is less than 50%.

24. The preparation method for a battery separator according to any one of claims 20 to 23, wherein the polyolefin resin raw material further comprises heat-resistant resin, and a melting point of the heat-resistant resin is higher than a melting point of the polyethylene resin.

25. The preparation method for a battery separator according to any one of claims 20 to 24, wherein the first-time stretching comprises stretching in two directions: an MD and a TD, and a total stretching multiple of MD × TD is less than or equal to 36.

26. The preparation method for a battery separator according to claim 25, wherein a unidirectional stretching multiple in the MD is less than or equal to 6, and a unidirectional stretching multiple in the TD is less than or equal to 6.

27. The preparation method for a battery separator according to claim 25, wherein a stretching temperature of the first-time stretching is 105°C to 135°C, and a unidirectional stretching speed in the MD or the TD is 2% to 70% per second.

28. The preparation method for a battery separator according to any one of claims 20 to 27, wherein the second-time stretching comprises two stretching directions: an MD and a TD, a unidirectional stretching multiple in the MD is 1 to 2, and a unidirectional stretching multiple in the TD is 1 to 2.

29. The preparation method for a battery separator according to any one of claims 20 to 28, wherein in the operation of extruding the mixed liquid, and cooling and casting the mixed liquid into a sheet, a cooling speed is greater than 60°C per minute.

30. A battery, comprising a positive electrode, a negative electrode, and a separator and an electrolyte that are located between the positive electrode and the negative electrode, wherein the separator comprises the battery separator according to any one of claims 1 to 19.

31. The battery according to claim 30, wherein the battery comprises a lithium-ion battery.

32. A terminal, comprising a housing, and a display module, an electronic component module, and a battery that are accommodated in the housing, wherein the battery supplies power to the display module and the electronic component module, and the battery comprises the battery according to claim 30 or 31.
